# EUROPEAN PATENT SPECIFICATION

(11) **EP 0 807 563 B1**
(45) Date of publication and mention of the grant of the patent: **09.01.2002**
(21) Application number: 96307769.8
(22) Date of filing: 28.10.1996
(51) Int. Cl.: B62B 3/00

(54) **A roller platform**
Rollpalette
Palette à roues

(30) Priority: 13.05.1996 GB 9609928; 03.06.1996 GB 9611548
(43) Date of publication of application: 19.11.1997
(73) Proprietor: Lin Pac Mouldings Limited, Witton Birmingham B6 7HY (GB)
(72) Inventor: Beauxis, Jean-Paul, 21120 Marcilly-Sur-Tille (FR); Chance, Harry, Sutton Coldfield, West Midlands, B74 2QA (GB)
(74) Representative: Walters, Frederick James

(56) References cited:
- DE-A- 3 538 188
- GB-A- 2 263 684
- GB-A- 2 280 166
- US-A- 4 095 769

## Description

### TECHNICAL FIELD & BACKGROUND ART

The present invention relates to a roller platform. Roller platforms, sometimes called roller pallets, are well known for materials handling and conventionally comprise a deck carrying rollers such as castors or other wheels by which mobility is provided for the platform. The load carrying area of the deck is of a modular size to accommodate one or more articles of predetermined dimensions, such as containers. It has been proposed to provide a means whereby the decks of two similar platforms can be releasably engaged with each other to provide an enlarged load carrying deck area. This prior art is known from document GB-A-2 280 166.

It is an object of the present invention to provide a roller platform which provides this facility in a relatively simple platform structure.

### STATEMENT OF INVENTION & ADVANTAGES

According to the present invention there is provided a roller platform comprising a deck carrying roller means which provide the platform with mobility, the deck having a lock member with a longitudinally extending axis, the lock member being longitudinally displaceable relative to the deck so that when two similar said platforms are positioned adjacent to each other with their decks in a common plane, the lock member can be displaced to a position in which it bridges longitudinally both decks, and wherein securing means is provided which is engageable between the lock member and both decks to restrain the platforms from displacement relative to each other.

By the present invention the deck of the platform carries a lock member which, when not in use, will normally be retained unobtrusively on the deck and which when required for coupling together two similar platforms is displaceable longitudinally of itself to bridge the decks of the two platforms so that the securing means can be engaged between the decks of both platforms and the lock member in a sense to restrain the platforms from displacement relative to each other. If each of the two platforms is provided with a single lock member, it will be appreciated that the two lock members can bridge both decks of the two platforms and securing means engaged between the two lock members and the two platforms thereby permitting greater rigidity to be achieved between the platforms which are coupled together (as compared with when a single lock member is utilised).

The securing means can be carried by the lock member and/or the deck. Preferably the securing means is carried by the lock member and may be formed integral therewith, for example by the lock member and securing means being formed as a plastics moulded unit. With the securing means carried by the lock member, the lock member may be rotatable about its longitudinal axis to a condition in which the securing means engages both decks. As an alternative arrangement the securing means can be carried on the lock member to be pivotally displaceable relative to that member to a condition in which its required engagement with the two decks is achieved.

Preferably the securing means is presented by two longitudinally spaced lugs which project laterally on the lock member so that when the lock member bridges the decks of two platforms the lugs are engageable unobtrusively with seatings on the respective decks to secure the platforms relative to each other. Preferably the lugs are rigid with the lock member for unified rotation therewith to engage the lugs with the respective seatings. A further proposal is for the lugs to be hingedly connected to the lock member for pivotal displacement relative thereto to engage the lugs with the respective seatings. In a still further proposal the securing means is presented by two longitudinal end extensions located one at each longitudinal end of the lock member and pivotally displaceable relative thereto about a laterally extending axis. When the lock member bridges two platforms the end extensions can be engaged with seatings on the decks of the respective platforms to secure the platforms relative to each other. When the lock member is not in use it is preferred that it can be displaced longitudinally to a stored position in which it is unobtrusive on the deck; in the stored position the securing means may be engageable between that member and deck, for example the lugs or end extensions as aforementioned may be engaged with seatings on the deck to retain the lock member in the aforementioned unobtrusive position. When the securing means carried by the lock member engages with seatings as aforementioned (such seatings being either on the deck which carries that lock member or on both of two adjacent decks which the lock member bridges), it is preferred that the seatings and the securing means engage in a sense to restrain the securing means in said engagement; for example the lugs or end extensions may clip on to the seatings, be a friction fit or snap engage therewith so that a positive manual effort is required to dis-engage the securing means from its unobtrusive engagement with the seatings.

Preferably the lock member is longitudinally displacable along a longitudinally extending track on the deck and when the lock member bridges two said decks as aforementioned, it co-operates with the tracks on both decks. In a preferred structure the track has a longitudinally extending cavity part and a longitudinally extending slot part which is parallel with and opens into the cavity part. With such a track the lock member can be in the form of a bolt which, preferably, is complementary to and longitudinally slidable in the cavity part. Lugs as aforementioned can extend laterally from the bolt to be received in the slot part along which they are longitudinally displaceable and are presented to provide a convenient means for adjusting the lock member in its track. Preferably the bolt is captured in the cavity part to be restrained laterally from passing through the slot part by the width of the slot part being relatively less than that of the bolt. With this latter form of track the seatings as previously mentioned for the lugs are conveniently in the form of recesses which communicate with the slot part. These recesses may accommodate the lugs of the bolt by relative rotation of the bolt about its longitudinal axis in the cavity part of the track or by pivotal movement of the lugs relative to the bolt (for the bolt to be non-rotatable) so that the lugs are unobtrusive on the deck or decks when either the bolt is extended from its deck to bridge with another deck or is withdrawn into an unobtrusive stored position on the deck which carries it.

The lock member can be carried in an upper load carrying face or an underside face of the deck. However, for ease of access and to ensure that the lock member is clear of goods which may be carried on the deck, it is preferred that the lock member is mounted for longitudinal displacement along a side edge of the deck. The deck is likely to have two opposed and substantially parallel side edges so that a lock member may be carried along either of the two side edges or two lock members may be provided one in each of the opposed side edges. In an arrangement where the lock member is mounted for longitudinal displacement along a side edge, such lock member may be capable of bridging between the deck of the platform on which it is carried and the deck of a second similar platform which second similar platform may be positioned at either end of the side edge on which the lock member is carried. Usually the deck will be of substantially rectangular shape in plan to have a first pair of opposed and substantially parallel side edges and a second pair of opposed and substantially parallel side edges and a lock member may be provided at a side edge or edges on either or both of the first and second pairs. With this latter possibility in mind a lock member for one of the two pairs of side edges may be removed from that side edge and relocated at the other of the two pairs of side edges as may be appropriate for the desired orientation of two decks which are to be coupled together (for example if the two decks are of oblong rectangular shape in plan they may be coupled together in side-by-side or end-to-end relationship).

Typically the deck will be formed in plastics. Where the deck includes a track having the longitudinally extending cavity part and the relatively narrower longitudinally extending slot part as aforementioned, it is preferred (to facilitate manufacture of the deck) that the deck is formed of at least two plastics mouldings which are secured together and each of which partly defines the longitudinally extending cavity part and the longitudinally extending slot part over their longitudinal extent. By this technique the necessity for using collapsible or adjustable moulding tools (which may otherwise be required to remove a male part of the moulding tool from within the moulded elongated cavity part of the track) may be alleviated.

### DRAWINGS

One embodiment of a roller platform constructed in accordance with the present invention will now be described, by way of example only, with reference to the accompanying illustrative drawings, in which:
Figures 1 and 2 are side and end elevations respectively of the platform;
Figure 3 is a plan view from above of the deck of the platform;
Figures 4, 5 and 6 are a side elevation, end elevation and plan view respectively of a rotatable lock member (with securing means) carried by the deck of the platform;
Figure 7 diagrammatically illustrates the decks of two similar platforms positioned to be coupled together and a lock member being adjusted to effect such coupling;
Figure 8 is a similar view of the decks to that shown in Figure 7 and diagrammatically illustrates the lock member and securing means adjusted to engage both decks to restrain the platforms for displacement relative to each other;
Figure 9 is a scrap section taken on the line IX - IX of Figure 8 to illustrate snap engagement between a lug of the securing means and a seating in which that lug is accommodated unobtrusively;
Figure 10 illustrates a modification for the platform shown in Figure 8 in which the lock member is non-rotatable and carries hinged lugs;
Figures 11 and 12 show respectively part of the lock member and a lug of Figure 10 and a section thereof on the line XII - XII of Figure 11;
Figure 13 illustrates a further modification for the platform shown in Figure 8 in which the lock member is non-rotatable and carries hinged end extensions, and
Figures 14 and 15 show respectively a plan and a side elevation of an end extension on the lock member in Figure 13.

### DETAILED DESCRIPTION OF DRAWINGS

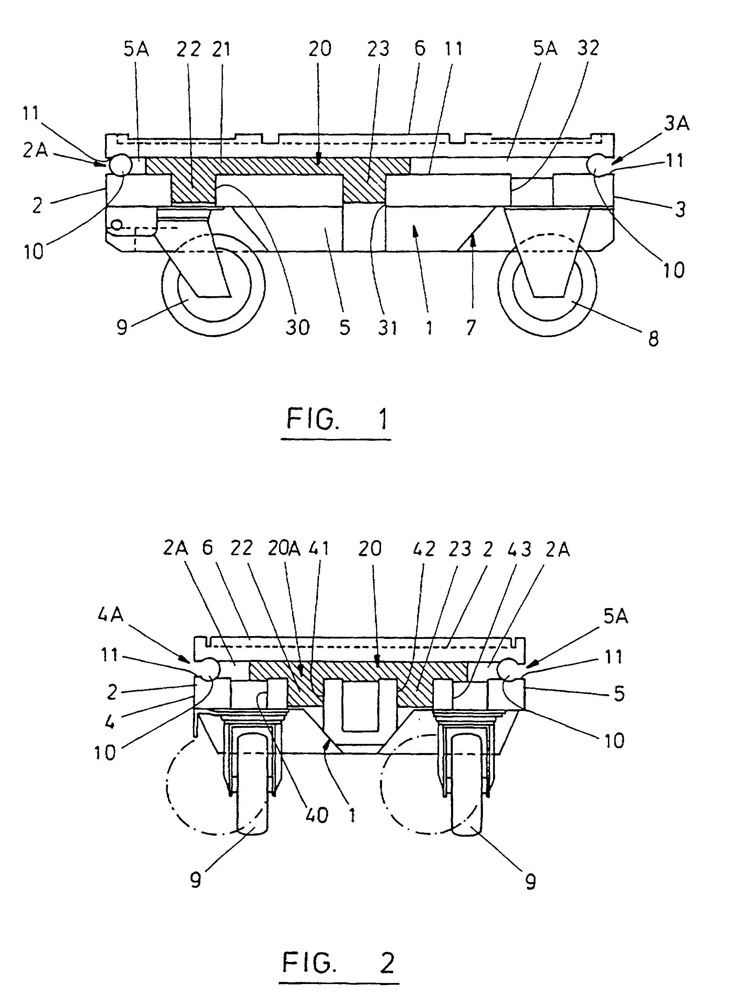

The roller platform shown in Figures 1 to 3 has a plastics deck 1 which is of substantially oblong rectangular shape to provide a first pair of opposed parallel side edges 2 and 3, a second pair of opposed parallel side edges 4 and 5, an upper load carryingface 6 and an underface shown generally at 7. Bolted to the deck 1 on the underside face thereof are a pair of non-castoring ground engaging wheels 8 and a pair of castored wheels 9 which are located one in each of the four corners of the deck as is conventional for roller platforms.

Located in the side edges 4 and 5 are rectilinear tracks 4A and 5A respectively; these tracks 4A and 5A are substantially parallel to each other and to the upper face 6 of the deck and open at their ends into the side edges 2 and 3. The side edges 2 and 3 have similar rectilinear tracks 2A and 3A respectively which are substantially parallel to each other and to the upper face 6 of the deck and open at their ends into the side edges 4 and 5.

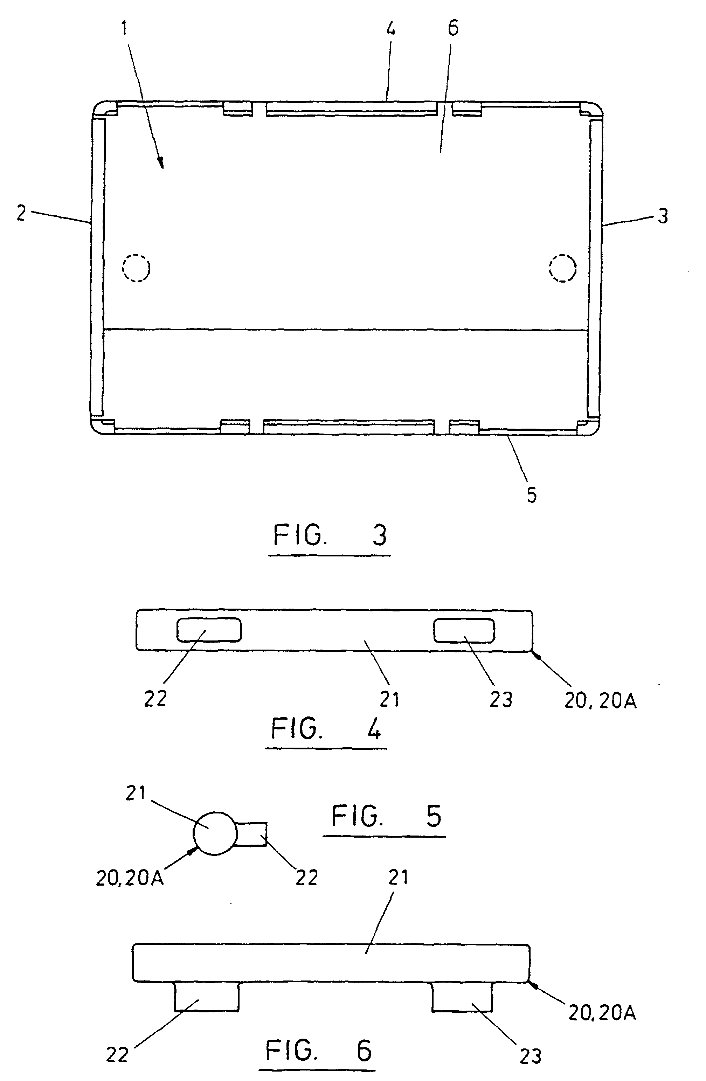

The tracks 2A, 3A, 4A and 5A are similarly formed, each having a part cylindrical cavity 10 which extends over the length of the respective edge and a slot 11 which also extends over the length of the respective edge and opens in that edge to communicate with the cavity 10 with which it is parallel. It will be seen from Figures 1 and 2 that the tracks 2A to 5A are of substantially keyhole shape in lateral cross section whereby the width of a slot 11 is substantially less than the diameter of the cylindrical cavity 10 with which that slot communicates.

In the present embodiment the deck 1 is provided with two couplings 20 and 20A each of which is similar to that shown in Figures 4 to 6 and has a lock member in the form of a cylindrical bolt 21 which carries securing means in the form of a pair of coplanar lugs 22, 23 that extend radially in a similar sense from the bolt, are rigid therewith and are axially/longitudinally spaced thereon.

The bolt 21 is complementary to the cylindrical cavity 10 of the tracks and is slidably received in such a cavity from an end of the respective track so that the lugs 22 and 23 extend through the slot 11 of the track. By use of the lugs 22, 23 the bolt 21 can be slidably manoeuvred along, say, the track 5A until the bolt of the coupling is accommodated within the length of the side edge 5 as shown in Figure 1.

Provided in the side edge 5 are three recesses 30, 31 and 32 which are longitudinally spaced on that side edge and communicate with the slot 11 of the track 5A. The three recesses 30 to 32 are positioned longitudinally so that the spacing between two adjacent recesses of the three corresponds to the longitudinal spacing between the lugs 22 and 23. Furthermore, the recesses 30, 31 and 32 are complementary to the lugs 22 and 23 so that when those lugs coincide with two adjacent recesses, the coupling 20 can be rotated about the longitudinal axis of its bolt 21 by manual pressure applied to the lugs 22 and 23 to cause the lugs to move into and be accommodated by seatings provided by two adjacent recesses 30 to 32 in the side edge 5. In the arrangement shown in Figure 1 the lugs 22 and 23 are shown accommodated unobtrusively in the recesses 30 and 31 respectively but it will be appreciated that they can equally be accommodated (by appropriate positioning of the lock member along the track 5A) in the recesses 31 and 32 respectively. For convenience of identification the couplings 20 and 20A are shown shaded in Figures 1 and 2. The second coupling 20A is shown in Figure 2 accommodated by the track 2A in the side edge 2 of the deck. The coupling in the track 2A is substantially the same as that shown in Figure 1 but has dimensional variations to accommodate for the difference in length between the track 2A and the track 5A. Furthermore, the side edge 2 is provided with four longitudinally spaced recesses 40 to 43 which communicate with the slot 11 of the track 2A to provide seatings for the lugs 22 and 23 of the lock member 20A in the track 2A (in a similar manner to the recesses 30 to 32 for the lock member 20 in Figure 1). In Figure 2 the coupling 20 is shown accommodated unobtrusively within the length of the side edge 2 with the lugs 22 and 23 received within the longitudinally spaced seatings formed by the recesses 41 and 42.

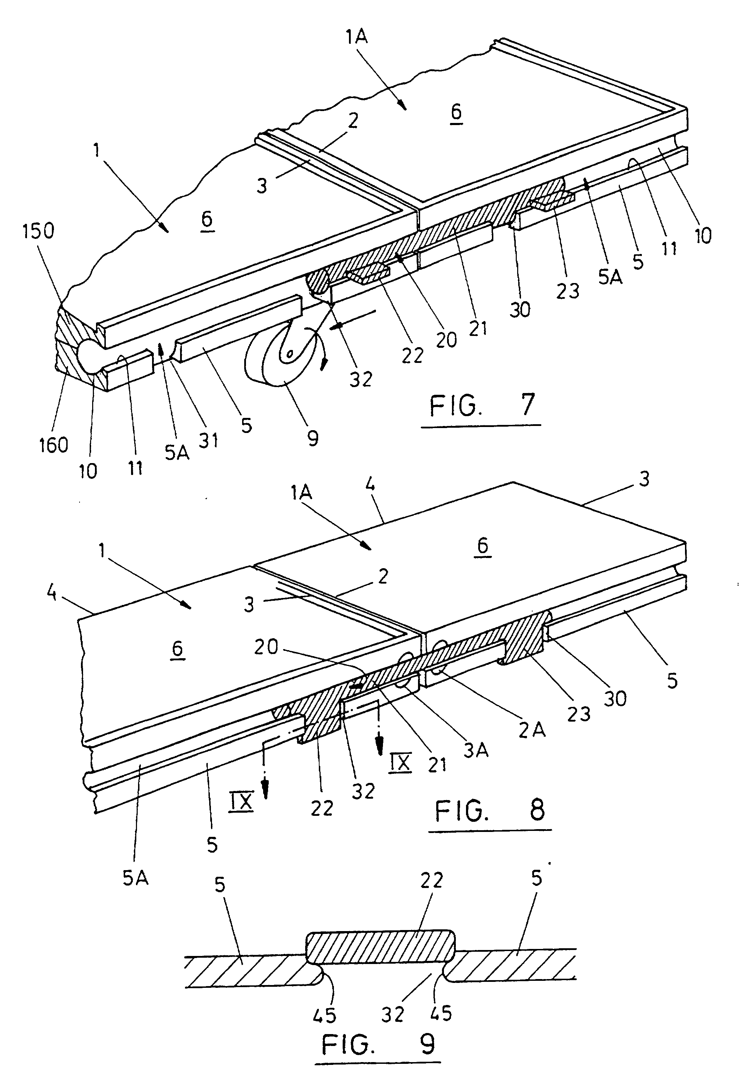

It will be appreciated that the bolts of the couplings 20 and 20A shown in Figures 1 and 2 are restrained from longitudinal displacement in their respective tracks by location of the lugs 22 and 23 in their respective seatings provided by the recesses in the side walls. To alleviate the possibility of the lugs from unintentionally moving out of their respective recesses 30 to 31 and 40 to 43 (for example as a result of vibration of the platform during its use) and thereby permit the bolts to move along their tracks, it is preferred that the lugs 22 and 23 snap engage with the seatings in which they are received. Intentional manual effort will therefore be required to engage the lug with its seating and also to dis-engage the lug from its seating. An example of this latter arrangement is shown in Figure 9 where small ribs or other protrusions 45 are provided on the side edge 5 at longitudinally opposed positions in the mouth of the recess 32 so that the lug 22 in engaging with the seating provided by the recess 32 has to snap engage over the protrusions 45. Similar provision for snap engagement and dis-engagement between the lugs and seatings can be provided for each of the recesses 30 to 32 and 40 to 43.

When an assembly of two roller platforms is required so that the assembly presents an enlarged load carrying face 6, two similar platforms are manoeuvred so that their decks shown at 1 and 1A are positioned in coplanar and abutting relationship, for example as shown in Figures 7 and 8 where the side edge 3 of deck 1 coincides with and abuts the side edge 2 of deck 1A and the tracks in the side edges 4 and 5 coincide rectilinearly. With the platforms so disposed the coupling 20 in the track 5A of deck 1 can be rotated to release its lugs 22, 23 from the seatings associated with the track 5A in that deck 1 and thereafter slidably displaced as a whole along that track 5A until eventually the bolt 21 of the coupling enters into the cavity part 10 of the track 5A in the deck 1A whilst the lug 23 on the bolt is received within the slot 11 of the track 5A on the deck 1A and the bolt of the coupling 20 bridges both decks 1 and 1A as shown in Figure 7. In this latter condition the coupling 20 is rotated about the longitudinal axis of its bolt 21 so that its lugs 22 and 23 snap engage respectively with the seating 32 on the deck 1 and the seating 30 on the deck 1A (as shown in Figure 8). Similarly a coupling (not shown) carried in the track 4A of the side edge 4 on the deck 1A may be extended from that deck to bridge with the deck 1 and rotated to engage with seatings of the track 4A of the deck 1 (in a similar manner to that shown for the coupling 20 in the tracks 5A of Figure 8). The two decks 1 and 1A are consequently bridged by two lock members on opposite edges of the deck assembly which is formed to provide a load carrying deck face which is substantially rigid when the decks are supported on their respective rollers.

It will be appreciated that the decks 1 and 1A of the two platforms can alternatively be coupled together in side-by-side relationship (rather than end-to-end relationship as shown in Figures 7 and 8) by use of the coupling 20A carried in the tracks 2A or 3A and that such coupling is effected in a similar manner to that previously described. In particular with the arrangement of the side edge 2 shown in Figure 2, when the coupling 20A in the track 2A of that side edge bridges with the deck of an adjacent platform, the lug 22 will engage with a seating 43 in one deck whilst the lug 23 will engage with the seating 40 in the deck of the other platform.

It will be apparent from Figures 1, 2 and 10 that the keyhole section of the tracks 2A to 5A presents an undercut which would conventionally require a collapsible or adjustable tool for moulding the deck as a one piece component (the collapsible tool being required to permit a male part of the tool which defines the part cylindrical cavity 10 to be withdrawn from that cavity following moulding). Collapsible moulding tools are recognised as being expensive. To alleviate this it is preferred that the deck is formed as an assembly of at least two moulded parts each of which partly defines one or more of the tracks 2A to 5A. In the preferred embodiment as illustrated the platform is formed as an assembly of upper and lower overlying platform parts 150 and 160 as shown in Figure 7 which together define the four tracks that extend around the periphery of the deck. The plastics moulded parts 150 and 160 will usually be secured together by threaded bolts, conveniently the same bolts as those which secure the wheels 8 and 9 to the deck.

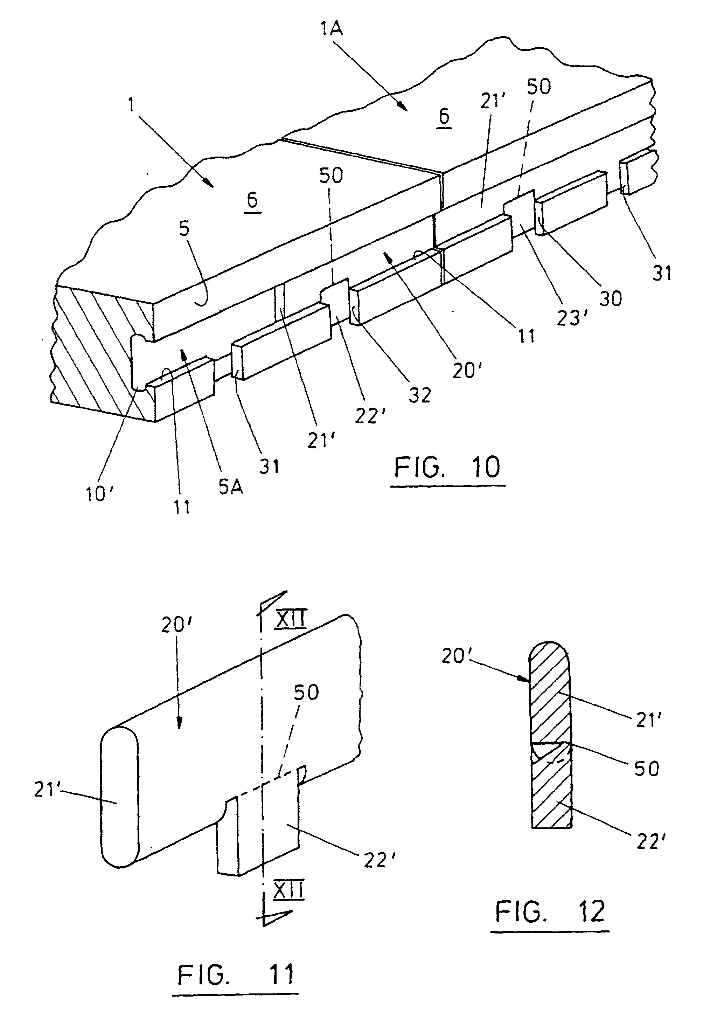

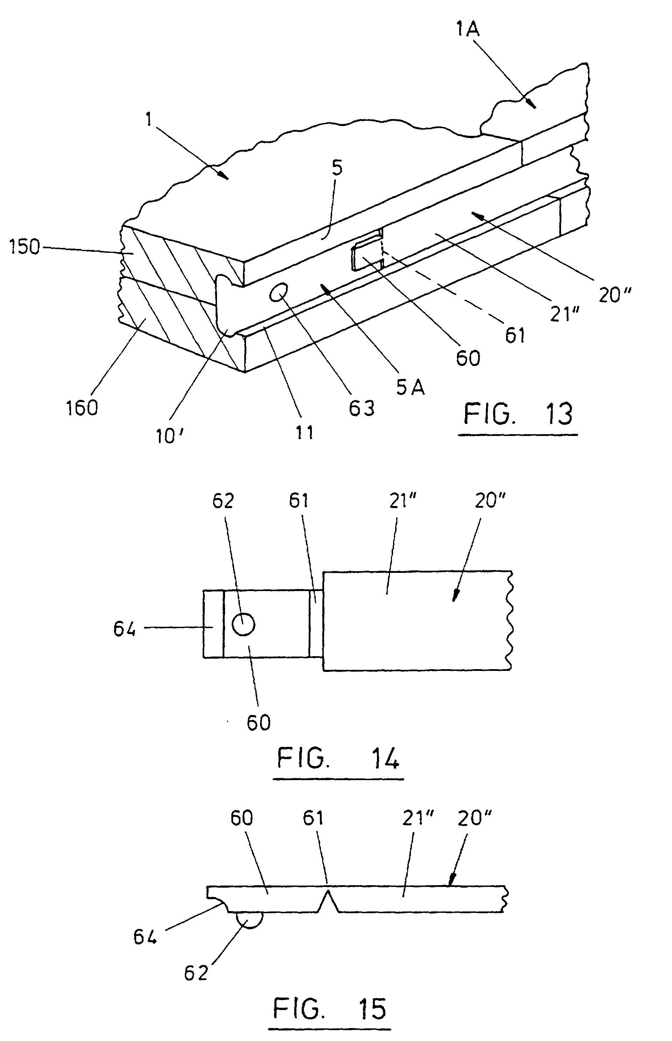

The roller pallets 1 and 1A shown in Figures 10 and 13 each have a construction which overall is similar to the roller pallet as discussed with reference to Figures 1 to 9 but modifications are included in the couplings 20 and 20A. In the modification shown in Figures 10 to 12 the coupling is indicated at 20' as being longitudinally displaceable in the track 5A. The track 5A is of substantially "T" section comprising an oblong rectangular sectioned cavity part 10' which communicates with the slot 11. The coupling 20' has a bolt 21' which is of rectangular section complementary to the cavity part 10 in which it is received to be longitudinally slidable therein. Carried on the bolt 21' are two lugs 22' and 23' similarly disposed to the lugs 22 and 23 in the arrangement of Figure 8. However, in the modification the lugs 22' and 23' are pivotally mounted on the bolt 21' to be capable of hinged movement relative to the bolt 21' about hinge lines 50 which extend parallel to the longitudinal axis of the bolt.

Unlike the arrangement shown in Figure 8, the bolt 21' is non-rotatable in the cavity 10' of the track 5A. As a consequence, for the bolt 21' to be longitudinally displaced along the track 5A it is necessary for the lugs 22' and 23' to be pivotted on their hinges 50 to a position in which they project through the slot 11 so that the lugs can move longitudinally within the slot. To secure the coupling 20' relative to one or both of the platforms 1 and 1A, the hinged lugs 22' and 23' are pivotted relative to the bolt 21' so that they snap engage in the respective seatings (30, 31 or 32) in a similar manner to that previously described to restrain longitudinal displacement between the coupling 20' and one or both of the platforms 1 and 1A. The coupling 20' is conveniently formed as a one piece moulding in plastics so that the lugs 22' and 23' are carried on the bolt 21' through integral plastics hinges (best seen at 50 in Figure 12).

In the modification shown in Figures 13 to 15 the track 5A is of similar "T" section to that shown in Figure 10. Carried by the track 5A is a coupling 20" which comprises a longitudinally extending bolt 21" which is of rectangular section complementary to the cavity part 10' and is longitudinally slidably received in that cavity part. Each end of the bolt 21" is provided with a longitudinal extension 60 (for convenience only one such extension is shown in Figure 13, it being appreciated that the extension at the opposite end of the bolt 21" is a duplicate of that shown at 60). The extension 60 is norrower than the width of the slot 11 and is pivotally mounted on the bolt 21" (to constitute part of the coupling 20") through a hinge 61 so that it is capable of displacement relative to the bolt about a laterally extending axis as indicated at 61 in Figure 13. Carried on each extension 60 is a stud 62. Provided in the base of the cavity part 10' of the track 5A are holes 63 at positions which may be considered as seatings disposed in a similar array to those shown at 30 to 32 in Figure 10. By pivotal movement about the hinges 61, the extensions 60 can be displaced relative to the non-rotatable bolt 21" so that the extensions project through the slot 11 to be convenient to hold for displacing the bolt 21" along the track 5A (as the extensions 60 move along the track 11). To secure the coupling 20" within one platform or relative to two platforms which that coupling bridges, the extensions 60 are displaced about their hinges so that the studs 62 are press fitted as a friction fit, possibly with snap engagement, into holes 63 in the track or tracks. Conveniently the free end of each extension 60 is provided with a chamfer or undercut 64 to facilitate holding of the extension to withdraw the stud 62 from the hole 63 when repositioning of the coupling is required. Preferably the coupling 20" is formed as a one piece plastics moulding to provide an integral plastics hinge 61 between each extension 60 and the bolt 21".

## Claims

1. A roller platform comprising a deck carrying roller means which provide the platform with mobility, the deck having a lock member with a longitudinally extending axis, the lock member being longitudinally displaceable relative to the deck so that when two similar said platforms are positioned adjacent to each other with their decks in a common plane, the lock member can be displaced to a position in which it bridges longitudinally both decks, and wherein securing means is provided which is releasably engageable between the lock member and both decks to restrain the platforms from displacement relative to each other.

2. A platform as claimed in claim 1 in which the securing means is carried by the lock member.

3. A platform as claimed in claim 2 in which the lock member is rotatable about its longitudinal axis to a condition in which the securing means provides said engagement with both decks.

4. A platform as claimed in claim 2 in which the securing means is mounted on the lock member to be pivotally displaceable relative thereto to a condition in which it provides said engagement with both decks.

5. A platform as claimed in either claim 3 or claim 4 in which the securing means comprises two longitudinally spaced lugs which project laterally on the lock member so that when the lock member bridges said two platforms, the lugs are engageable with seatings on the decks of the respective platforms to secure the platforms relative to each other.

6. A platform as claimed in claim 5 when appendant to claim 3 in which the lugs are rigid with the lock member for unified rotation therewith.

7. A platform as claimed in claim 5 when appendant to claim 4 in which the lugs are hingedly connected to the lock member for said pivotal displacement relative thereto.

8. A platform as claimed in claim 4 in which the securing means comprises two end extensions on the lock member located one at each longitudinal end thereof and which extensions are pivotally displaceable relative to the lock member about laterally extending axes so that when the lock member bridges said two platforms the end extensions can be engaged with seatings on the decks of the respective platforms to secure the platforms relative to each other.

9. A platform as claimed in claim 8 in which the end extensions are hingedly connected to the lock member for said pivotal displacement relative thereto.

10. A platform as claimed in any one of claims 5 to 9 in which the deck has at least two said seatings which are longitudinally spaced so that when the lock member is not in use to bridge the decks of the two said platforms, it can be displaced longitudinally to a stored position in which it is unobtrusive on the deck and the securing means can be displaced to co-operate with said seatings.

11. A platform as claimed in any one of claims 5 to 10 in which the securing means when displaced to engage with said respective seatings is restrained from displacement out of said engagement.

12. A platform as claimed in claim 11 in which the securing means is restrained in engagement with its respective seating by clip, snap or friction fit engagement therewith.

13. A platform as claimed in any one of the preceding claims in which the lock member is longitudinally displaceable along a longitudinally extending track on the deck and when the lock member bridges two decks of said two similar platforms, it co-operates with the tracks on both decks.

14. A platform as claimed in claim 13 when appendant to claim 2 in which the track comprises a longitudinally extending cavity part and a longitudinally extending slot part which is parallel with and opens into the cavity part and the lock member comprises a bolt which is longitudinally slidable in the cavity part, said securing means extending or being capable of extending laterally from the bolt to be received in the slot part along which the securing means is longitudinally displaceable whilst the bolt is restrained laterally from passing through the slot part by the width of the slot part being relatively less than that of the bolt.

15. A platform as claimed in claim 14 when appendant to claim 3 in which the cavity part of the track is substantially cylindrical and the bolt is complementary thereto to be rotatable in the cavity part.

16. A platform as claimed in either claim 14 or claim 15 when appendant to claim 5 in which the seatings are in the form of recesses which communicate with the slot part and are intended to accommodate the lugs.

17. A platform as claimed in claim 14 when appendant to claim 8 in which the seatings with which the end extensions are engageable are located in the cavity part of the track.

18. A platform as claimed in any one of the preceding claims in which the lock member is carried by the deck for longitudinal displacement along a side edge of the deck.

19. A platform as claimed in claim 18 in which the deck has two opposed and substantially parallel side edges each of which carries or is capable of carrying a lock member for longitudinal displacement along the respective side edge.

20. A platform as claimed in claim 19 in which the deck is of substantially rectangular shape in plan to have a first pair of opposed and substantially parallel side edges and a second pair of opposed and substantially parallel side edges and a said lock member is carried by at least one side edge in both of the first and second pairs.

21. A platform as claimed in either claim 19 or claim 20 in which the lock member carried by a said side edge is removable from that side edge and re-locatable to be carried by another of said side edges.

22. A platform as claimed in any one of the preceding claims in which the lock member and securing means are of plastics.

23. A platform as claimed in claim 22 when appendant to claim 4 in which the securing means and lock member are moulded integrally in plastics and said pivotal displacement therebetween is provided by an integral plastics hinge.

24. A platform as claimed in any one of the preceding claims in which the deck is of plastics.

25. A platform as claimed in claim 24 when appendant to claim 14 in which the deck is formed as an assembly of at least two plastics mouldings which are secured together and each of which partly defines the longitudinally extending cavity part and the longitudinally extending slot part of the or a track.

26. A platform as claimed in claim 25 in which the deck comprises an assembly of upper and lower overlying deck parts which together define the cavity part and slot part of the track in at least one side edge of the deck.

27. A platform as claimed in either claim 25 or claim 26 in which the plastics mouldings are retained together as an assembly by securing means, said securing means also serving to secure the roller means to the deck.

## Patentansprüche

1. Rollenplattform, die eine Tragfläche umfasst, die eine der Plattform Beweglichkeit verleihende Rollenvorrichtung trägt, wobei die Tragfläche eine Einrastvorrichtung mit einer sich longitudinal erstreckender Achse aufweist, wobei die Einrastvorrichtung mit Bezug auf die Tragfläche longitudinal so verschiebbar ist, dass, wenn zwei ähnliche derartige Plattformen so nebeneinander plaziert werden, dass ihre Tragflächen in einer gemeinsamen Ebene liegen, die Einrastvorrichtung in eine Position verschoben werden kann, in der sie beide Tragflächen longitudinal überbrückt und wobei eine Befestigungsvorrichtung bereitgestellt wird, die zwischen der Einrastvorrichtung und den beiden Tragflächen so lösbar einrückbar ist, dass sie die Plattformen am Verschieben mit Bezug aufeinander hindert.

2. Plattform nach Anspruch 1, bei der die Befestigungsvorrichtung von der Einrastvorrichtung getragen wird.

3. Plattform nach Anspruch 2, bei der die Einrastvorrichtung um ihre eigene Längsachse drehbar ist bis zu einem Zustand, in dem die Befestigungsvorrichtung das Einrücken in die beiden Tragflächenen ermöglicht.

4. Plattform nach Anspruch 2, bei der die Befestigungsvorrichtung so auf der Einrastvorrichtung montiert ist, dass sie bezüglich letzterer drehbar verschiebbar ist, bis sie einen Zustand erreicht, in dem sie das Einrücken in beide Tragflächen ermöglicht.

5. Plattform nach Anspruch 3 oder Anspruch 4, bei der die Befestigungsvorrichtung zwei longitudinal im Abstand voneinander gehaltene Ansätzen umfasst, die lateral an der Einrastvorrichtung so vorstehen, dass, wenn die Einrastvorrichtung die beiden Plattformen überbrückt, die Ansätze so in die Lagerungen an den Tragflächen der jeweiligen Plattformen so einrücken, dass die Plattformen mit Bezug aufeinander befestigt werden.

6. Plattform nach Anspruch 5, wenn er Anspruch 3 angehängt ist, bei der die Ansätze mit der Einrastvorrichtung zum gemeinsamen Drehen mit dieser starr verbundenen sind.

7. Plattform nach Anspruch 5, wenn er Anspruch 4 angehängt ist, bei der die Ansätze schwenkbar mit der Einrastvorrichtung verbunden sind zum drehbaren Verschieben mit Bezug auf letztere.

8. Plattform nach Anspruch 4, bei der die Befestigungsvorrichtung zwei Endverlängerungen an der Einrastvorrichtung umfasst, von denen sich jeweils eine an jedem Längsende derselben befindet, wobei die Verlängerungen mit Bezug auf die Einrastvorrichtung drehbar so um sich lateral erstreckende Achsen verschiebbar sind, dass, wenn die Einrastvorrichtung die beiden Plattformen überbrückt, die Endverlängerungen in die Lagerungen an den Tragflächen der jeweiligen Plattformen so eingerastet werden können, dass die Plattformen mit Bezug aufeinander befestigt sind.

9. Plattform nach Anspruch 8, bei der die Endverlängerungen schwenkbar mit der Einrastvorrichtung verbunden sind für die drehbare Verschiebung mit Bezug auf letztere.

10. Plattform nach einem der Ansprüche 5 bis 9, bei der die Tragfläche mindestens zwei der Lagerungen aufweist, die longitudinal so im Abstand voneinander gehalten werden, dass, wenn die Einrastvorrichtung nicht in Betrieb ist, um die Tragflächen der beiden Plattformen zu überbrücken, sie longitudinal in eine Lagerposition verschoben werden kann, in der sie auf der Tragfläche unauffällig ist und die Befestigungsvorrichtung für ein Zusammenspiel mit den Lagerungen verschoben werden kann.

11. Plattform nach einem der Ansprüche 5 bis 10, bei der die Befestigungsvorrichtung, wenn sie zum Einrücken in die jeweiligen Lagerungen verschoben ist, am Verschieben aus der Einrückposition gehindert wird.

12. Plattform nach Anspruch 11, bei der die Befestigungsvorrichtung durch Klammer-, Schnapp- oder Reibungssitzeinrücken in Einrückstellung in der jeweiligen Lagerung gehalten wird.

13. Plattform nach einem der vorhergehenden Ansprüche, bei der die Einrastvorrichtung longitudinal einer sich longitudinal der Tragfläche entlang erstreckenden Bahn verschiebbar ist und, wenn die Einrastvorrichtung zwei Tragflächen der beiden ähnlichen Plattformen überbrückt, sie mit den Bahnen auf beiden Tragflächen kooperiert.

14. Plattform nach Anspruch 13, wenn er Anspruch 2 angehängt ist, bei der die Bahn einen sich longitudinal erstreckenden Hohlraumteil und einen sich longitudinal erstreckenden Schlitzteil umfasst, der zum Hohlraumteil parallel liegt und in diesen mündet und die Einrastvorrichtung einen Bolzen umfasst, der longitudinal in den Hohlraumteil gleiten kann, wobei die Befestigungsvorrichtung sich lateral vom Bolzen erstreckt oder erstrecken kann, der im Schlitzteil, dem entlang die Befestigungsvorrichtung longitudinal verschiebbar ist, aufgenommen werden soll, während der Bolzen lateral dadurch daran gehindert wird, durch den Schlitzteil hindurchzugehen, dass die Breite des Schlitzteils relativ geringer ist als diejenige des Bolzens.

15. Plattform nach Anspruch 14, wenn er Anspruch 3 angehängt ist, bei der der Hohlraumteil der Bahn im Wesentlichen zylindrisch ist und der Bolzen dazu komplementär im Hohlraumteil drehbar ist.

16. Plattform nach Anspruch 14 oder Anspruch 15, wenn er Anspruch 5 angehängt ist, bei der die Lagerungen die Form von Vertiefungen aufweisen, die mit dem Schlitzteil kommunizieren und die Ansätze aufnehmen sollen.

17. Plattform nach Anspruch 14, wenn er Anspruch 8 angehängt ist, bei der die Lagerungen, in die die Endverlängerungen eingerückbar sind, sich im Hohlraumteil der Bahn befinden.

18. Plattform nach einem der vorhergehenden Ansprüche, bei der die Einrastvorrichtung von der Tragfläche zur longitudinalen Verschiebung einer Seitenkante der Tragfläche entlang getragen wird.

19. Plattform nach Anspruch 18, bei der die Tragfläche zwei einander gegenüberliegende und im Wesentlichen parallele Seitenkanten aufweist, von denen jede eine Einrastvorrichtung für die longitudinale Verschiebung den jeweiligen Seitenkanten entlang trägt oder tragen kann.

20. Plattform nach Anspruch 19, bei der die Tragfläche eine im Grundriss im Wesentlichen rechteckige Gestalt aufweist, so dass sie ein erstes Paar einander gegenüberliegender und im Wesentlichen paralleler Seitenkanten und ein zweites Paar einander gegenüberliegender und im Wesentlichen paralleler Seitenkanten besitzt und die Einrastvorrichtung von mindestens einer Seitenkante sowohl im ersten als auch im zweiten Paar getragen wird.

21. Plattform nach Anspruch 19 oder Anspruch 20, bei der die durch eine Seitenkante getragenen Einrastvorrichtung von der Seitenkante entfern- und so verlegbar ist, dass sie von einer anderen der Seitenkanten getragen werden kann.

22. Plattform nach einem der vorhergehenden Ansprüche, bei der die Einrastvorrichtung und die Befestigungsvorrichtung aus Kunststoff bestehen.

23. Plattform nach Anspruch 22, wenn er Anspruch 4 angehängt ist, bei der die Befestigungsvorrichtung und die Einrastvorrichtung integral aus Kunststoff geformt sind und die drehbare Verschiebung zwischen diesen durch integrale Kunststoffgelenke hergestellt wird.

24. Plattform nach einem der vorhergehenden Ansprüche, bei der die Tragfläche aus Kunststoff besteht.

25. Plattform nach Anspruch 24, wenn er Anspruch 14 angehängt ist, bei der die Tragfläche als Zusammenbau von mindestens zwei Kunststoff-Formkörpern gebildet ist, die aneinander befestigt sind, und von denen jeder teilweise den sich longitudinal erstreckenden Hohlraumteil und den sich longitudinal erstreckenden Schlitzteil der oder einer Bahn definiert.

26. Plattform nach Anspruch 25, bei der die Tragfläche ein Zusammenbau von oberen und darunter liegenden Tragflächenteilen umfasst, die zusammen den Hohlraumteil und den Schlitzteil der Bahn in mindestens einer Seitenkante der Tragfläche definieren.

27. Plattform nach Anspruch 25 oder Anspruch 26, bei der die Kunststoff-Formkörper durch eine Befestigungsvorrichtung als Zusammenbau zusammengehalten werden, wobei die Befestigungsvorrichtung auch zum Befestigen der Rollenvorrichtung an die Tragfläche dient.

## Revendications

1. Plate-forme à rouleaux comprenant des moyens de rouleaux porteurs de pont qui confèrent une mobilité à la plate-forme, le pont ayant un élément de verrouillage à axe s'étendant longitudinalement, l'élément de verrouillage étant déplaçable longitudinalement par rapport au pont de telle sorte que lorsque deux dites plates-formes semblables sont positionnées l'une à côté de l'autre avec leurs ponts dans un plan commun, l'élément de verrouillage puisse être déplacé sur une position dans laquelle il accouple longitudinalement les deux ponts, et dans laquelle un moyen de fixation qui est engageable de manière détachable entre l'élément de verrouillage et les deux ponts est fourni afin d'empêcher les plates-formes de se déplacer l'une par rapport à l'autre.

2. Plate-forme selon la revendication 1, dans laquelle le moyen de fixation est porté par l'élément de verrouillage.

3. Plate-forme selon la revendication 2, dans laquelle l'élément de verrouillage peut tourner autour de son axe longitudinal jusqu'à une condition dans laquelle le moyen de fixation assure ledit engagement avec les deux ponts.

4. Plate-forme selon la revendication 2, dans laquelle le moyen de fixation est monté sur l'élément de verrouillage pour être déplaçable de manière pivotante par rapport à celui-ci jusqu'à une condition dans laquelle il assure ledit engagement avec les deux ponts.

5. Plate-forme selon la revendication 3 ou la revendication 4, dans laquelle le moyen de fixation comprend deux talons espacés longitudinalement qui saillent latéralement sur l'élément de verrouillage de telle sorte que lorsque l'élément de verrouillage accouple lesdites deux plates-formes, les talons soient engageables avec des logements sur les ponts des plates-formes respectives afin de fixer les plates-formes l'une par rapport à l'autre.

6. Plate-forme selon la revendication 5 dépendante de la revendication 3, dans laquelle les talons sont rigides avec l'élément de verrouillage en vue d'une rotation unifiée avec lui.

7. Plate-forme selon la revendication 5 dépendante de la revendication 4, dans laquelle les talons sont connectés par charnière à l'élément de verrouillage en vue dudit déplacement pivotant par rapport à celui-ci.

8. Plate-forme selon la revendication 4, dans laquelle le moyen de fixation comprend deux extensions d'extrémité sur l'élément de verrouillage situées une à chaque extrémité longitudinale de celui-ci et lesquelles extensions sont déplaçables de manière pivotante par rapport à l'élément de verrouillage autour d'axes s'étendant latéralement de telle sorte que lorsque l'élément de verrouillage accouple lesdites deux plates-formes les extensions d'extrémité puissent être engagées avec des logements sur les ponts des plates-formes respectives afin de fixer les plates-formes l'une par rapport à l'autre.

9. Plate-forme selon la revendication 8, dans laquelle les extensions d'extrémité sont connectées par charnière à l'élément de verrouillage en vue du déplacement pivotant par rapport à celui-ci.

10. Plate-forme selon l'une quelconque des revendications 5 à 9, dans laquelle le pont a au moins deux dits logements qui sont espacés longitudinalement de telle sorte que lorsque l'élément de verrouillage n'est pas utilisé pour accoupler les ponts desdites deux plates-formes, il puisse être déplacé longitudinalement à une position rangée dans laquelle il est discret sur le pont et le moyen de fixation peut être déplacé pour coopérer avec lesdits logements.

11. Plate-forme selon l'une quelconque des revendications 5 à 10, dans laquelle le moyen de fixation lorsqu'il est déplacé pour s'engager avec lesdits logements respectifs est empêché de se déplacer hors dudit engagement.

12. Plate-forme selon la revendication 11, dans laquelle le moyen de fixation est maintenu en engagement avec son logement respectif par un engagement à clip, à cran ou à friction.

13. Plate-forme selon l'une quelconque des revendications précédentes, dans laquelle l'élément de verrouillage est déplaçable longitudinalement le long d'une piste s'étendant longitudinalement sur le pont et quand l'élément de verrouillage accouple deux ponts desdites deux plates-formes semblables, il coopère avec les pistes sur les deux ponts.

14. Plate-forme selon la revendication 13 dépendant de la revendication 2, dans laquelle la piste comprend une partie de cavité s'étendant longitudinalement et une partie de fente s'étendant longitudinalement qui est parallèle à et s'ouvre dans la partie de cavité et l'élément de verrouillage comprend un boulon qui est coulissable longitudinalement dans la partie de cavité, ledit moyen de fixation s'étendant ou pouvant s'étendre latéralement depuis le boulon devant être reçu dans la partie de fente le long de laquelle le moyen de fixation est déplaçable longitudinalement alors que le boulon est empêché latéralement de passer à travers la partie de fente par le fait que la largeur de la partie de fente relativement inférieure à celle du boulon.

15. Plate-forme selon la revendication 14 dépendante de la revendication 3, dans laquelle la partie de cavité de la piste est substantiellement cylindrique et le boulon est complémentaire à cette partie en vue de pouvoir tourner dans la partie de cavité.

16. Plate-forme selon la revendication 14 ou la revendication 15 dépendante de la revendication 5, dans laquelle les logements sont en forme d'évidements qui communiquent avec la partie de fente et sont destinés à recevoir les talons.

17. Plate-forme selon la revendication 14 dépendante de la revendication 8, dans laquelle les logements avec lesquels les extensions d'extrémité sont engageables sont situés dans la partie de cavité de la piste.

18. Plate-forme selon l'une quelconque des revendications précédentes, dans laquelle l'élément de verrouillage est porté par le pont en vue d'un déplacement longitudinal le long d'un bord latéral du pont.

19. Plate-forme selon la revendication 18, dans laquelle le pont a deux bords latéraux opposés et substantiellement parallèles qui chacun porte ou peut porter un élément de verrouillage en vue d'un déplacement longitudinal le long du bord latéral respectif.

20. Plate-forme selon la revendication 19, dans laquelle le pont est d'un plan de forme substantiellement rectangulaire en vue d'avoir une première paire de bords latéraux opposés et substantiellement parallèles et une deuxième paire de bords latéraux opposés et substantiellement parallèles et un dit élément de verrouillage est porté par au moins un bord latéral dans lesdites première et deuxième paires.

21. Plate-forme selon la revendication 19 ou la revendication 20, dans laquelle l'élément de verrouillage porté par un dit bord latéral peut être retiré de ce bord latéral et être replacé pour être porté par un autre desdits bords latéraux.

22. Plate-forme selon l'une quelconque des revendications précédentes, dans laquelle l'élément de verrouillage et l'élément de fixation sont en plastique.

23. Plate-forme selon la revendication 22 dépendante de la revendication 4, dans laquelle le moyen de fixation et l'élément de verrouillage sont moulés intégralement en plastique et ledit déplacement pivotant entre eux est assuré par une charnière en plastique solidaire.

24. Plate-forme selon l'une quelconque des revendications précédentes, dans laquelle le pont est en plastique.

25. Plate-forme selon la revendication 24 dépendante de la revendication 14, dans laquelle le pont est formé sous forme d'assemblage d'au moins deux moulages en plastique qui sont fixés ensemble et qui définissent chacun partiellement la partie de cavité s'étendant longitudinalement et la partie de fente s'étendant longitudinalement de la ou d'une piste.

26. Plate-forme selon la revendication 25, dans laquelle le pont comprend un assemblage de parties de pont en surplomb supérieure et inférieure qui définissent ensemble la partie de cavité et la partie de fente de la piste dans au moins un bord latéral du pont.

27. Plate-forme selon la revendication 25 ou la revendication 26, dans laquelle les moulages en plastique sont retenus ensemble sous forme d'assemblage par un moyen de fixation, ledit moyen de fixation servant aussi à fixer les moyens de rouleaux au pont.
